# EUROPÄISCHE PATENTSCHRIFT

(11) **EP 2 064 079 B1**
(45) Veröffentlichungstag und Bekanntmachung des Hinweises auf die Patenterteilung: **07.09.2011**
(21) Anmeldenummer: 07765232.9
(22) Anmeldetag: 19.07.2007
(51) Int. Cl.: B60J 5/04, B60R 19/00, B60N 2/42

(54) **VORRICHTUNG FÜR EIN KRAFTFAHRZEUG ZUM INSASSENSCHUTZ BEI EINEM KOLLISIONSBEDINGTEN, AUF EINE KRAFTFAHRZEUGTÜR GERICHTETEN ENERGIEEINTRAG**
DEVICE FOR A MOTOR VEHICLE FOR PROTECTING VEHICLE OCCUPANTS WHEN THERE IS AN APPLICATION OF ENERGY DIRECTED AT A MOTOR VEHICLE DOOR DUE TO A COLLISION
DISPOSITIF POUR UN VEHICULE DESTINE A LA PROTECTION DES PASSAGERS, EN CAS D'APPORT D'ENERGIE ORIENTE VERS UNE PORTIERE DU VEHICULE SUITE A UNE COLLISION

(30) Priorität: 19.09.2006 DE 202006014549 U
(43) Veröffentlichungstag der Anmeldung: 03.06.2009
(73) Patentinhaber: Fraunhofer-Gesellschaft zur Förderung der angewandten Forschung e.V., 80686 München (DE); Faurecia Innenraumsysteme GmbH, 76767 Hagenbach (DE)
(72) Erfinder: MELZ, Tobias, 64285 Darmstadt (DE); SEIPEL, Björn, 61197 Florstadt (DE); KOCH, Thorsten, 64342 Seeheim-Jugenheim (DE); KÄSGEN, Johannes, 64285 Darmstadt (DE); ZIMMERMAN, Eric, 34125 Kassel (DE); GAVRILOV, Christo, 80636 München (DE); MUNTEAN, Vlad, Radu, RO-437335 Somcuta Mare (RO)
(74) Vertreter: Rösler, Uwe
(86) Internationale Anmeldenummer: PCT/EP2007/006441
(87) Internationale Veröffentlichungsnummer: WO 2008/034481

(56) Entgegenhaltungen:
- EP-A- 1 700 776
- DE-A1- 19 839 519
- US-A1- 2004 183 337
- US-A1- 2006 038 428

## Beschreibung

### Technisches Gebiet

Die Erfindung bezieht sich auf eine Vorrichtung für ein Kraftfahrzeug zum Insassenschutz bei einem kollisionsbedingten, seitlich auf eine Kraftfahrzeugtür gerichteten Energieeintrag, mit einer Verbindungsstruktur, die wenigstens zwei Teile, einen ersten und einen zweiten Teil aufweist, von denen der erste Teil mit der Kraftfahrzeugtür und der zweite Teil mit einem Energie absorbierenden, im Fahrzeuginnenraum befindlichen Bereich der Kraftfahrzeugkarosserie fest verbunden ist und beide Teile über wenigstens einen gemeinsamen Fügebereich zur gezielten Ableitung wenigstens eines Teils des seitlich auf die Kraftfahrzeugtür einwirkenden Energieeintrages in den Bereich der Kraftfahrzeugkarosserie miteinander in Wirkverbindung bringbar sind.

### Stand der Technik

Der Insassenschutz bei Kraftfahrzeugen gilt als eine der Hauptaufgaben bei der Konstruktion und Neuentwicklung von Kraftfahrzeugen. Ein eigenes Entwicklungsziel dient der Auslegung ausgeprägter Knautschzonen im Front- und Heckbereich, die die Fahrgastzelle bei Front- und Heckkollisionen weitgehend sicher zu schützen vermögen. Bei seitlichen Kollisionen hingegen bereitet der Insassenschutz aufgrund der kleinen zur Verfügung stehenden Deformationswege und des geringen Absörptionsvermögens der Seitenstruktur eines Kraftfahrzeuges größere Probleme.

Bekannte Lösungen zur Entschärfung der bei Seitenkollisionen von Kraftfahrzeugen bestehenden Gefahr für die Insassen sehen Versteifungen der Kraftfahrzeugtür vor. So sind beispielsweise in die Kraftfahrzeugtür integrierte Profile, die in Fahrzeugquerrichtung eine hohe Steifigkeit und/oder ein hohes Energieaufnahmevermögen besitzen, bekannt. Beispielsweise geht aus der DE 196 33 637 A1 eine Fahrzeugtür mit Seitenaufprallschutz hervor, in deren Türrahmen bogenförmig ausgebildete Haltestangen vorgesehen sind, die im Kollisionsfall derart verdreht und unter Zugbelastung gleichsam der Wirkung eines Fangnetzes deformiert werden.

Eine derartige Versteifung der Seitentüren durch Vorsehen entsprechender Längsträger ist jedoch in schwerwiegenden Kollisionsfällen nicht immer ausreichend zur Sicherung der Insassen, da bei einer äußeren Krafteinwirkung auf die Seitentür diese durch den Türausschnitt der Fahrzeugkarosserie regelrecht durchgedrückt werden kann, so dass der Überlebensraum der Insassen drastisch eingeengt und die Überlebenschancen gleichsam reduziert werden.

Der Stand der Technik kennt überdies eine Reihe von Maßnahmen, die geeignet sind, auf die Seitentür einwirkende Kräfte auf die Fahrzeugkarosserie zu übertragen. Beispielsweise durch entsprechend große Überlappung zwischen Tür und Türausschnitt oder durch aus dem Rand der Tür herausragende Bolzen, die im Kollisionsfall in verstärkte Aussparungen des Türausschnittes der Kfz-Karosserie eingreifen. So geht aus der DE AS 22 15 674 eine für eine Kfz-Tür vorgesehene Verstärkungseinrichtung hervor, die im wesentlichen aus einem nach außen gewölbten Träger besteht, dessen Endabschnitte bei einer durch einen äußeren Aufprall bewirkten Deformation des Trägers in eine gestreckte Form in entsprechend stabile Ausnehmungen innerhalb des Türrahmens eindringen. Der Träger besteht vorzugsweise aus profiliertem Stahlblech, das typisch durch Umformen in entsprechende Form gebracht wird.

Zur Vermeidung eines durch die vorstehenden Maßnahmen bedingte Zunahme des Eigengewichtes des Kraftfahrzeuges wird in der DE 41 25 299 C2 eine für eine Kfz-Tür vorgesehene Verstärkungseinrichtung beschrieben, die aus Gründen der Gewichtsreduzierung aus einer, aus faserverstärktem Verbundwerkstoff gefertigten bogenförmig geformten Verstärkungsträgereinrichtung besteht. Auch in diesem Fall befindet sich die Verstärkungsvorrichtung vollständig innerhalb der Tür, die lediglich im Kollisionsfall aufgrund der einhergehenden Deformation des Verstärkungsträgers beidseitig mit den Endbereichen aus der Tür hervortritt, die ihrerseits wiederum mit stabilen Abstützflanken im Türrahmen der Kfz-Karosserie in Wirkverbindung treten.

Aus der DE 198 39 519 A1 ist eine Fahrgastzelle zu entnehmen, die als Schutzeinrichtung für die Fahrzeuginsassen im Falle einer Seitenkollision eine Querträgerkonstruktion vorsieht, die im Kollisionsfall eine starre Querverbindung zwischen der Fahrzeugtür und der Mittelskonsole herstellt, so dass der Sitzbereich vor in die Fahrgastzelle eindringenden Fahrzeugtürbereichen geschützt werden soll. Die Querträgerkonstruktion tritt lediglich im Kollisionsfall in Erscheinung, indem pyrotechnische oder pneumatische Aktoren, die ansonsten in der Sitz-, Tür- und Mittelkonsolenverkleidung integrierte, gelenkig ausgebildete Querträgerkonstruktion unter Ausbildung einer stabilen Querverbindung auslängt.

### Darstellung der Erfindung

Ausgehend von dem vorbezeichneten Stand der Technik liegt der Erfindung die Aufgabe zugrunde, ein den Insassenschutz optimierendes Sicherheitssystem anzugeben, das im Falle eines Seitenaufpralls oder einer dem Seitenaufprall ähnlichen Kollisionssituation einen erhöhten Insassenschutz zu bieten vermag. Insbesondere gilt es, das Sicherheitssystem dahingehend zu verbessern, dass die im Kollisionsfall seitlich auf eine Kraftfahrzeugtür einwirkende Deformationsenergie gezielt und sicher aus dem Bereich der Kraftfahrzeugtür weggeleitet wird, um letztlich zu verhindern, dass der Insassenraum durch kollisionsbedingte Deformationen der Kraftfahrzeugtür übergebühr reduziert wird bzw. Teile derselben bei Eindringen den Insassen verletzen. Die hierfür zu treffenden Massnahmen sollen möglichst wenig Bauraum benötigen und von einfacher Konstruktion sein, so dass ein hohes Maß an Zuverlässigkeit und zugleich eine möglichst kostengünstige Herstellung ermöglicht werden kann.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf das Ausführungsbeispiel zu entnehmen.

Die Vorrichtung für ein Kraftfahrzeug zum Insassenschutz bei einem kollisionsbedingten, seitlich auf eine Kraftfahrzeugtür gerichteten Energieeintrag, mit einer Verbindungsstruktur, die wenigstens zwei Teile, einen ersten und einen zweiten Teil aufweist, von denen der erste Teil mit der Kraftfahrzeugtür und der zweite Teil mit einem Energie absorbierenden, im Fahrzeuginnenraum befindlichen Bereich der Kraftfahrzeugkarosserie fest verbunden ist und beide Teile über wenigstens einen gemeinsamen Fügebereich zur gezielten Ableitung wenigstens eines Teils des seitlich auf die Kraftfahrzeugtür einwirkenden Energieeintrages in den Bereich der Kraftfahrzeugkarosserie miteinander in Wirkverbindung bringbar sind, ist derart ausgebildet, dass das erste Teil drehbar fest an einem Schwenklager innerhalb der Kraftfahrzeugtür angelenkt ist und aus einer vertikalen Stellung in eine horizontale Stellung kraftbeaufschlagt und reversibel überführbar ist,
dass das zweite Teil stangen- oder rohrförmig ausgebildet ist und ein erstes mit der Kraftfahrzeugkarosserie fest verbundenes Ende aufweist,
dass das zweite Teil ein dem ersten Ende gegenüberliegendes zweites Ende aufweist, das aus einer ersten Position durch horizontale Linearbewegung in eine zweite Position kraftbeaufschlagt und reversibel überführbar ist, und dass das erste Teil in der horizontalen Stellung und das zweite Teil in der zweiten Position über einen gemeinsamen Fügebereich derart in Wirkverbindung bringbar sind, dass der auf die Kraftfahrzeugtür einwirkende Energieeintrag längs eines linear und horizontal orientierten Kraftflusses von dem Schwenklager über das erste und zweite Teil auf das fest mit der Kraftfahrzeugkarosserie verbundene erste Ende des zweiten Teils ableitbar ist.

Im Unterschied zu den eingangs beschriebenen, bekannten Lösungen zur Erhöhung der Steifigkeit von Kraftfahrzeugtüren, bei denen die Kraftfahrzeugtür durchragende Seitenaufprallträger vorgesehen sind, die im Kollisionsfall seitlich, in stabilere Karosseriebereiche eindringen, um somit die auf die Kraftfahrzeugtür gerichtete Crash-Energie im Extremfall quer zur Wirkrichtung umzuleiten, gemäß der Druckschriften DE-AS 2 215 674 und DE 196 33 637 A1, greift das lösungsgemäße Konzept das bereits in der vorstehend zitierten DE 198 39 519 A1 beschriebene Konzept auf eine mit der Kraftfahrzeugtür verbundene stabile Verbindungsstruktur vorzusehen, durch die die Crash-Energie, insbesondere in einem Seitenaufprallszenario im Wesentlichen parallel in Wirkrichtung in einen, im Kraftfahrzeug-Innenraum befindlichen stabilen Karosseriebereich abgeleitet wird. Hiervon unterscheidet sich das lösungsgemäße Konzept jedoch durch die wesentlich einfachere Realisierung und vereinfachte Konstruktion, wodurch das lösungsgemäße Sicherheitskonzept leichter, kostengünstiger und in der Funktion zuverlässiger arbeitend angeboten werden kann. Darüber hinaus bedarf die lösungsgemäße Vorrichtung einen weitaus geringeren Platzbedarf im Fahrzeug, wodurch die Attraktivität für den Einsatz dieser Lösung im KfZ-Bereich sehr hoch ist.

Zur Realisierung einer im Crashfall längssteifen Abstützung, die zwischen der Kraftfahrzeugtür einerseits und einem im Kraftfahrzeuginnenraum befindlichen stabilen Kraftfahrzeugkarosseriebereich wirken soll, dient einerseits ein erstes Teil, das vorzugsweise als Rohrstück mit einem recheckförmigen Querschnitt - selbstverständlich sind auch von der Rechtecksform abweichende Querschnitt denkbar - ausgebildet ist und bezüglich Form und Länge derart dimensioniert ist, dass das erste Teil vollständig im Inneren einer Kraftfahrzeugtür integriert werden kann, wobei das erste Teil schwenkbar um ein Schwenkachse innerhalb der Kraftfahrzeugtür gelagert ist und aus einer vertikalen in eine horizontale Stellung überführbar ist. Andererseits ist innerhalb des Kraftfahrzeugraumes ein zweites Teil vorgesehen, das gleichfalls stangen- oder rohrförmig ausgebildet ist, jedoch länger als das erste Teil und mit einem Ende fest mit einem stabilen Kraftfahrzeugkarosseriebereich, bspw. am steifen Teil des Tunnels, verbunden ist. Der zweite Teil ist horizontal gelagert und durchragt vorzugsweise wenigstens einen Kraftfahrzeugsitz und schließt mit der äußeren Kontur des Sitzes ab, die der Kraftfahrzeugtür zugewandt ist. Im Gegensatz zum ersten Teil, das einstückig ausgebildet ist, ist das zweite Teil mindestens zweistückig ausgebildet und weist zwei teleskopartig relativ zueinander längsbewegliche Stangen- bzw. Rohrabschnitte auf, von denen ein Abschnitt fest mit dem stabilen Kraftfahrzeugkarosseriebereich verbunden ist und der andere längsbeweglich gelagert ist. Beispielsweise ist der bewegliche Abschnitt als Bolzen ausgebildet und innerhalb des rohrförmig ausgebildeten fest angebrachten Abschnittes längsbeweglich geführt. Zudem wirkt ein als Feder ausgebildetes Kraftelement auf den beweglich ausgebildeten Bolzen, wodurch dieser bei freier Beweglichkeit in entgegengesetzter Richtung zum fest stehenden Abschnitt getrieben wird. Ein aus SMA-Material bestehendes Haltemittel bewirkt, dass der Bolzen innerhalb des feststehenden rohrförmigen Abschnittes verbleibt.

In einer Ausgangssituation, die dem normalen Betriebszustandes des Kraftfahrzeuges entspricht sind beide Teile voneinander beabstandet, d.h., das erste Teil befindet sich innerhalb der Kraftfahrzeugtür in einer von außen nicht einsehbaren vertikalen Stellung. Hierbei nimmt das erste Teil keinen oder nur einen geringfügigen Platz ein, wodurch die Türfunktion und die damit verbundenen Komponenten, wie beispielsweise die Seitenscheibe, nicht beeinträchtiget werden. Auch ist es nicht erforderlich einen zusätzlichen Raum innerhalb der Kraftfahrzeugtür zu schaffen, vielmehr kann das erste Teil in jeder Kraftfahrzeugtür problemlos integriert werden. Das zweite Teil durchragt in horizontaler Längserstreckung quer zur Fahrtrichtung des Kraftfahrzeuges den Kraftfahrzeugsitz. In vorteilhafter Weise können zur Durchführung des zweiten Teils ohnehin innerhalb des Kraftfahrzeugsitzes vorhandene Kanäle genutzt werden, so dass der Integrationsaufwand sowie der Platzbedarf für den zweiten Teil innerhalb des Kraftfahrzeuges nahezu keine Rolle spielt. Das freie Ende des zweiten Teils, der wie vorstehend erläutert aus zwei Abschnitten besteht, d.h. das freien Ende des längsbeweglichen Abschnittes, das über das fest angebrachte Rohr hinausragt schließt mit der Seitenkontur des Kraftfahrzeugsitzes vorzugsweise formgetreu ab, so dass auch das zweite Teil augenfällig nicht in Erscheinung tritt und die Funktion sowohl des Kraftfahrzeugsitzes als auch angrenzende Komponenten nicht beeinträchtigt.

Beide freien Enden des ersten sowie auch des zweiten Teils weisen Abstützflächen auf, die, wie im weiteren beschrieben wird, im Falle einer drohenden Kollision eine flächige Fügeverbindung einzugehen vermögen.

Gleichsam dem Vorsehen eines aus SMA-Material bestehenden Haltemittels am zweiten Teil, zur Verhinderung eines einseitigen federkraftbeaufschlagten linear geführten Austritts des Bolzens aus dem rohrförmigen Abschnitt, ist das erste Teil gleichfalls mit einem entsprechendem SMA-Haltemittel gegen ein unkontrolliertes, federkraftbeaufschlagtes Verschwenken aus der vertikalen Stellung in die horizontale Stellung gesichert. Das erste Teil ist im Bereich des Schwenklagers mit einem Drehfederelement, bspw. in Form einer Spiralfeder verbunden, wodurch auf das erste Teil ein in die horizontale Stellung gerichtetes Drehmoment einwirkt.

Mit anderen Worten befinden sich im normalen Betriebszustand des Kraftfahrzeuges beide Teile in jeweils einer gespannten Ausgangsposition, gehalten jeweils von aus SMA-Material bestehenden Haltemittel, die durch Zufuhr elektrischer Energie nahezu verzögerungsfrei auslösbar sind, wodurch beide Teile dem jeweiligen mechanischem Zwang folgend, in ihre jeweiligen Positionen schlagartig übertreten, d.h. der erste Teil wird in die horizontale Stellung gekippt und der zweite Teil erstreckt sich horizontal in Verlängerung bis hin unmittelbar angrenzend zur Innenseite der Kraftfahrzeugtürinnenwandverkleidung. Der erste Teil schwenkt in seiner horizontalen Stellung in einen Raumbereich ein, der für die Seitenfensterscheibe vorgesehen ist und würde diese gar durchbrechen, sofern sie in einer herabgelassenen Fensterstellung verharrt. In dieser Stellung treten beide Teile stirnseitig längs einer gemeinsamen horizontalen Achse unmittelbar gegenüber und sind lediglich durch eine dünnwandige Kraftfahrzeugtürinnenwandverkleidung getrennt. Die sich in dieser Stellung an den jeweiligen freien Enden des ersten und zweiten Teils vorgesehenen Abstützflächen vermögen überdies die gegenseitige Abstützung weiter zu sichern.

In einer bevorzugten weiteren Ausführungsvariante könnten die Abstützflächen auch mit reversibel ausgebildeten Verriegelungsvorkehrungen ausgeführt sein, wodurch ein Kraftschluss zwischen dem ersten und zweiten Teil verbessert werden könnten.

Auch könnten beide Teile selbst aus Wandlerwerkstoffe bestehen oder zumindest Abschnitte des ersten und zweiten Teils aus einem entsprechendem Wandlerwerkstoff gefertigt sein, um bspw. ein Crashspezifisches Dämpfungsverhalten längs der lösungsgemäß ausgebildeten Verbindungsstruktur zu erhalten.

Von besonderem Vorteil der lösungsgemäßen Vorrichtung ist die Reversibilität zu nennen, d.h. sollten der erste und zweite Teil ausgelöst worden sein ohne dass es zu einem Crash kommt, so ist es ohne weiteren Aufwand möglich die Teile in den vorstehend beschriebnen "gespannten Normalzustand" wieder zurück zu führen. Zur Auslösung der SMA-Haltemittel dienen so genannte Precrah-Sensoren, die in an sich bekannter Weise an einem Kraftfahrzeug angebracht sind und unter Zugrundelegung bestimmter Entscheidungskriterien eine als unvermeidbar anzusehende Kollisionskonstellation noch vor Eintritt der Kollision zu erkennen vermögen. Aufgrund der Reversibilität sind an derartige Precrash-Sensoren geringere Anforderungen zu stellen, zumal bei einer Fehlauslösung kein großer Schaden zu Verzeichnen ist.

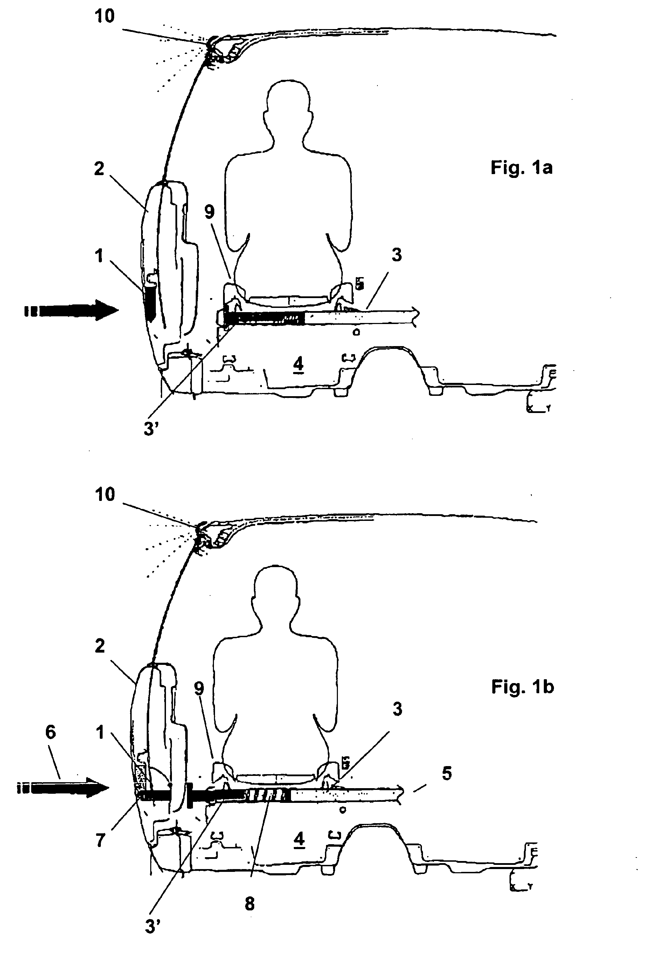

Zur weiteren Verdeutlichung der Vorrichtung zum Insassenschutz bei einem kollisionsbedingten, auf eine Kraftfahrzeugtür gerichteten Energieeintrags sei auf das nachstehend beschriebene, einzige Ausführungsbeispiel unter Bezugnahme auf die Figuren 1a und 1b verwiesen.

### Darstellung der Erfindung

In Figur 1 a ist ein schematische Querschnittsdarstellung durch eine Kraftfahrzeugzelle in der Höhe des Fahrersitzes gezeigt im Normalzustand, bei dem das erste Teil 1 eine vertikale Stellung innerhalb der Kraftfahrzeugtür 2 und das zweite Teil 3 eine innerhalb des Fahrersitzes 4 zurückgezogene Position einnimmt. Figur 1b zeigt hingegen den ausgelösten Zustand, bei dem das erste Teil 1 in die horizontale Stellung geschwenkt ist und das zweite Teil 3 in die ausgefahrene Position übergegangen ist. In dieser Stellung stossen beide Teile 1 und 3 stirnseitig zusammen, wodurch eine lineare, horizontal verlaufende Verbindungsstruktur zwischen den Kraftfahrzeugtür 2 und einem innenliegenden stabilen Karosseriebereich 5 gebildet wird, längs dem ein von Aussen auf das Kraftfahrzeug einwirkender Crashenergieeintrag 6 abgeleitet werden kann.

Das erste Teil ist vorzugsweise aus einem Rohr mit Rechteckquerschnitt ausgebildet und innerhalb der Kraftfahrzeugtür 2 über ein Schwenklager 7 schwenkbar um eine Horizontalachse verbunden. Das zweite Teil 3 ist als rohrfömiger Aktuator mit innenliegendem Bolzen 3' ausgebildet. Der Bolzen 3' ist mit einer Feder 8 vorgespannt, wird aber mittels einem Haltemittel 9 aus SMA Draht zunächst im Rohr zurückgehalten. Das Rohr in der Tür hingegen wird durch eine Drehfeder vorgespannt und ist ebenfalls durch ein SMA Haltemittel bei normalen Fahrsituationen arretiert
Bei einem vorauszusehenden Crash werden beide Haltemittel aufgrund einer Detektionsmeldung von Precrash- Sensoren 10 ausgelöst, d.h. der Bolzen 3' fährt aus dem Rohr am Kraftfahrzeugsitz 4 heraus und überbrückt den Spalt zwischen Sitz 4 und Türinnenverkleidung, so dass sich das stirnseitige Ende des Bolzens 3' an der Türinnenverkleidung anlegt. Gleichzeitig dreht sich das Rechtecksrohr 1 im Türkasten und schließt damit den Raum im Türkasten, der normalerweise für den Scheibenlauf benötigt wird. Bei ausgelöstem Zustand liegen beide Teile 1, 3 in einer horizontalen Linie, eine direkte Berührung wird nur durch die Materialdicke der Türverkleidung verhindert.

Der Rohraktuator 3 am Sitz ist auf der anderen Seite des Sitzes mit einem steifen Teil des Tunnels oder einem anderen steifen Teil 5 der gegenüber liegenden Fahrzeugseite verbunden.

Durch die Aktivierung beider Teile 1, 3 entsteht ein steifer horizontal liegender Verbund, der die eingeleitete Crashenergie 6 von der Tür 2 zum Tunnel oder besser zur anderen Fahrzeugseite wegleitet. Die Crashlasten werden normalerweise von der B-Säule aufgenommen, im vorliegenden Fall würde jedoch die B-Säule wirksam entlastet werden, zumal ein neuer von der B-Säule unabhängiger Lastpfad installiert worden ist.

Die lösungsgemäße Vorrichtung reduziert die Insassenbelastungen in einem wirksamen Maße, da:
- Eine Abstützung und daher Reduktion der Intrusion an der Tür direkt dort stattfindet wo der Insasse sitzt.
- Durch Entlastung der B-Säule wird auch die Intrusion der B-Säule und damit die der gesamten Fahrzeugseite reduziert.
- Durch die abstützende Wirkung direkt im Sitzbereich des Insassen ist auch eine Reduktion der Intrusion im Unfall zu erwarten, die bislang in den Prüfspezifikationen nicht abgebildet werden.

### Bezugszeichenliste

- 1: Erster Teil
- 2: Kraftfahrzeugtür
- 3: Zweiter Teil
- 3': Bolzen
- 4: Kraftfahrzeugsitz
- 5: Stabiler Karosseriebereich
- 6: Energieeintrag
- 7: Schwenkgelenk
- 8: Feder
- 9: Haltemittel
- 10: Precrash-Sensor

## Patentansprüche

1. Vorrichtung für ein Kraftfahrzeug zum Insassenschutz bei einem kollisionsbedingten, seitlich auf eine Kraftfahrzeugtür (2) gerichteten Energieeintrag, mit einer Verbindungsstruktur, die wenigstens zwei Teile, ein erstes und ein zweites Teil aufweist, von denen das erste Teil mit der Kraftfahrzeugtür und das zweite Teil mit einem Energie absorbierenden, im Fahrzeuginnenraum befindlichen Bereich der Kraftfahrzeugkarosserie fest verbunden ist und beide Teile über wenigstens einen gemeinsamen Fügebereich zur gezielten Ableitung wenigstens eines Teils des seitlich auf die Kraftfahrzeugtür einwirkenden Energieeintrages in den Bereich der Kraftfahrzeugkarosserie miteinander in Wirkverbindung bringbar sind, wobei das erste Teil (1) drehbar fest an einem Schwenklager innerhalb der Kraftfahrzeugtür angelenkt ist und **dadurch gekennzeichnet dass** es aus einer vertikalen Stellung in eine horizontale Stellung kraftbeaufschlagt und reversibel überführbar ist,
dass das zweite Teil (3) stangen- oder rohrfömig ausgebildet ist und ein erstes mit der Kraftfahrzeugkarosserie fest verbundenes Ende aufweist,
dass das zweite Teil ein dem ersten Ende gegenüberliegendes zweites Ende aufweist, das aus einer ersten Position durch horizontale Linearbewegung in eine zweite Position kraftbeaufschlagt und reversibel überführbar ist, und
dass das erste Teil (1) in der horizontalen Stellung und das zweite Teil (3) in der zweiten Position über einen gemeinsamen Fügebereich derart in Wirkverbindung bringbar sind, dass der auf die Kraftfahrzeugtür einwirkende Energieeintrag längs eines linear und horizontal orientierten Kraftflusses von dem Schwenklager (7) uber das erste und zweite Teil auf das fest mit der Kraftfahrzeugkarosserie verbundene erste Ende des zweiten Teils ableitbar ist.

2. Vorrichtung nach Anspruch 1,
**dadurch gekennzeichnet, dass** das erste Teil (1) stangen- oder rohrförmig ausgebildet ist und federkraftbeaufschlagt aus der vertikalen in die horizontale Stellung überführbar ist.

3. Vorrichtung nach Anspruch 1 oder 2,
**dadurch gekennzeichnet, dass** am Ort des Schwenklagers (7) wenigstens ein Drehfederelement am ersten Teil angelenkt ist, das das erste Mittel (1) aus der vertikalen in die horizontale Stellung überzuführen vermag.

4. Vorrichtung nach einem der Ansprüche 1 bis 3,
**dadurch gekennzeichnet, dass** das erste Teil (1) ein im Querschnitt rechteckförmig ausgebildetes Rohr aufweist, dessen ein Rohrende fest an der Schwenkachse befestigt ist und dessen anderes Rohrende frei endet und über eine Abstützfläche verfügt, und
dass das Rohr eine Länge aufweist, die kleiner bemessen ist als eine größte Dicke der Kraftfahrzeugtür.

5. Vorrichtung nach einem der Ansprüche 1 bis 4,
**dadurch gekennzeichnet, dass** das zweite Teil (3) zwei teleskopartig ineinandergreifende Rohrabschnitte, einen ersten und einen zweiten Rohrabschnitt aufweist, von denen ein erster Rohrabschnitt längs des zweiten Rohrabschnittes, der mit der Kraftfahrzeugkarosserie fest verbunden ist, linearbeweglich gelagert ist, dass der erste Rohrabschnitt über wenigstens ein Aktorelement derart kraftbeaufschlagt ist, um den ersten Rohrabschnitt vom zweiten Rohrabschnitt linear weg zu treiben.

6. Vorrichtung nach Anspruch 5,
**dadurch gekennzeichnet, dass** das Aktorelement eine Feder (8) ist.

7. Vorrichtung nach einem der Ansprüche 1 bis 6,
**dadurch gekennzeichnet, dass** am ersten (1) und zweiten Teil (3) ein Halteelement vorgesehen ist, durch das das erste Teil in der vertikalen Stellung und das zweite Teil in der ersten Position verharrt, und
dass beide Haltelemente zeitgleich auslösbar sind, so dass eine zeitgleiche Überführung des ersten Teils in die horizontale Stellung und des zweiten Teils in die zweite Position möglich ist.

8. Vorrichtung nach Anspruch 7,
**dadurch gekennzeichnet, dass** das Haltelement (9) ein Element aus SMA-Werkstoff oder Formgedächtniswerkstoff aufweist, das durch Zufuhr elektrischer Energie auslösbar ist.

9. Vorrichtung nach einem der Ansprüche 1 bis 8,
**dadurch gekennzeichnet, dass** das zweite Teil (3) zumindest teilweise durch den Kraftfahrzeugsitz (4) ragt

10. Vorrichtung nach einem der Ansprüche 1 bis 9,
**dadurch gekennzeichnet, dass** eine Annäherungssensorik (10) am oder im Kraftfahrzeug vorgesehen ist, die eine unvermeidbare Kollisionssituation erfasst und ein Signal erzeugt, durch das das erste (1) und das zweite Teil (3) in die horizontale Stellung bzw. in die zweite Position überführbar sind.

11. Vorrichtung nach einem der Ansprüche 1 bis 10,
**dadurch gekennzeichnet, dass** das erste Teil (1) in der horizontalen Stellung einen Bauraum innerhalb der Kraftfahrzeugtür (2) beansprucht, der für einen Normalbetrieb von einer andere Kraftfahrzeugkomponente, vorzugsweise von einer herabgelassenen Seitenscheiben beansprucht wird.

12. Vorrichtung nach einem der Ansprüche 1 bis 11
**dadurch gekennzeichnet, dass** das erste (1) und zweite Teil (3) im Fügebereich jeweils konform zueinander ausgebildete Fügekonturen aufweisen.

## Claims

1. A device for a motor vehicle for occupant protection in the event of an energy input caused by a collision and directed laterally onto a vehicle door (2), having a connecting structure which has at least two parts, a first part and a second part, of which the first part is connected permanently to the vehicle door and the second part is connected permanently to a region of the vehicle body which absorbs energy and is situated in the vehicle interior, and both parts can be brought into functional connection with each other in the region of the vehicle body by means of at least one common join region for targeted diversion of at least some of the energy input acting laterally on the vehicle door, wherein the first part (1) is rotatably articulated permanently on a pivot bearing inside the vehicle door and **characterised in that** it can be transferred in a force-actuated and reversible manner from a vertical position to a horizontal position, that the second part (3) is rod- or tube-shaped and has a first end which is connected permanently to the vehicle body, that the second part has a second end opposite the first end which can be transferred in a force-actuated and reversible manner from a first position to a second position by a horizontal linear movement, and that the first part (1) in the horizontal position and the second part (3) in the second position can be brought into functional connection with each other by means of a common join region in such a manner that the energy input acting on the vehicle door can be diverted along a linearly and horizontally oriented flow of force from the pivot bearing (7) via the first and second parts to the first end of the second part which is connected permanently to the vehicle body.

2. The device according to Claim 1,
**characterised in that** the first part (1) is rod- or tube-shaped and can be transferred in a spring-loaded manner from the vertical to the horizontal position.

3. The device according to Claim 1 or 2,
**characterised in that** at least one rotating spring element is articulated on the first part at the site of the pivot bearing (7), which rotating spring element can transfer the first means (1) from the vertical to the horizontal position.

4. The device according to one of Claims 1 to 3,
**characterised in that** the first part (1) has a tube with a rectangular cross section, one tube end of which is fixed permanently to the pivot axis and the other tube end of which is free and has a supporting face, and that the tube has a length which is less than a maximum thickness of the vehicle door.

5. The device according to one of Claims 1 to 4,
**characterised in that** the second part (3) has two tube sections, a first and a second tube section, which engage in each other in a telescopic manner, of which a first tube section is mounted in a linearly movable manner along the second tube section, which is connected permanently to the vehicle body, that the first tube section is force-actuated by means of at least one actuator element in such a manner in order to drive the first tube section linearly away from the second tube section.

6. The device according to Claim 5,
**characterised in that** the actuator element is a spring (8).

7. The device according to one of Claims 1 to 6,
**characterised in that** a retaining element is provided on the first part (1) and second part (3), by means of which retaining element the first part remains in the vertical position and the second part remains in the first position, and that both retaining elements can be triggered simultaneously so that a simultaneous transfer of the first part to the horizontal position and of the second part to the second position is possible.

8. The device according to Claim 7,
**characterised in that** the retaining element (9) has an element consisting of SMA material or shape memory material which can be triggered by the supply of electrical energy.

9. The device according to one of Claims 1 to 8,
**characterised in that** the second part (3) at least partially projects through the vehicle seat (4).

10. The device according to one of Claims 1 to 9,
**characterised in that** a proximity sensor system (10) is provided on or in the vehicle, which system detects an unavoidable collision situation and generates a signal by means of which the first part (1) and second part (3) can be transferred to the horizontal position and the second position respectively.

11. The device according to one of Claims 1 to 10,
**characterised in that** the first part (1) in the horizontal position takes up an installation space inside the vehicle door (2), which space is taken up in normal operation by another vehicle component, preferably a lowered side window.

12. The device according to one of Claims 1 to 11,
**characterised in that** the first part (1) and second part (3) each have join contours which conform to each other in the join region.

## Revendications

1. Dispositif pour véhicule automobile de protection des passagers en cas d'un apport d'énergie causé par une collision, dirigé latéralement sur une porte de véhicule (2), comportant une structure de liaison, qui présente au moins deux parties, une première et une deuxième partie, desquelles la première partie est reliée à la porte du véhicule et la deuxième partie est solidement reliée à une zone se trouvant dans l'espace intérieur du véhicule, absorbant l'énergie de la carrosserie du véhicule et les deux parties peuvent être amenées en liaison opérationnelle l'une avec l'autre par l'intermédiaire d'au moins une zone d'assemblage commune à des fins de dérivation ciblée d'au moins une partie de l'apport d'énergie agissant latéralement sur la porte du véhicule au niveau de la carrosserie du véhicule, dans lequel la première partie (1) est articulée rotativement et solidement sur un palier d'articulation à l'intérieur de la porte de véhicule et **caractérisé en ce que** elle peut passe d'une position verticale à une position horizontale de manière réversible sous la sollicitation d'une force, **en ce que** la deuxième partie (3) est réalisée en forme de tube ou de barre et,présente une première extrémité solidement reliée à la carrosserie du véhicule, **en ce que** la deuxième partie présente une deuxième extrémité en vis-à-vis de la première extrémité, qui peut passer d'une première position à une deuxième position par mouvement linéaire horizontal de manière réversible sous la sollicitation d'une force, et **en ce que** la première partie (1) dans la position horizontale et la deuxième partie (3) dans la deuxième position peuvent être amenées en liaison opérationnelle par l'intermédiaire d'une zone d'assemblage commune, de telle sorte que l'apport d'énergie agissant sur une zone d'assemblage commune peut être dérivé le long d'un flux de force orienté linéairement et horizontalement du palier d'articulation (7) en passant par la première et la deuxième partie sur la première extrémité de la deuxième partie reliée solidement à la carrosserie du véhicule.

2. Dispositif selon la revendication 1,
**caractérisé en ce que** la première partie (1) est réalisée en forme de tube ou de barre et peut passer de la position verticale à la position horizontale sous une sollicitation par ressort.

3. Dispositif selon la revendication 1 ou 2,
**caractérisé en ce que** à l'emplacement du palier d'articulation (7), au moins un élément de ressort rotatif est articulé sur la première partie, qui permet au premier moyen (1) de passer de la position verticale à la position horizontale.

4. Dispositif selon une des revendications 1 à 3,
**caractérisé en ce que** la première partie (1) présente un tube réalisé avec une section transversale de forme rectangulaire, dont une extrémité de tube est solidement fixée à l'axe de pivotement et dont l'autre extrémité de tube se termine librement et dispose d'une surface d'appui, et **en ce que** le tube présente une longueur, qui est de proportion plus petite qu'une plus grande épaisseur de la porte de véhicule.

5. Dispositif selon une des revendications 1 à 4,
**caractérisé en ce que** la deuxième partie (3) présente deux portions de tube télescopiques s'emboîtant l'une dans l'autre, une première et une deuxième portion de tube, desquelles une première portion de tube est positionnée de manière mobile linéairement le long de la deuxième portion de tube, qui est solidement reliée à la carrosserie de véhicule, **en ce que** la première portion de tube est sollicitée par une force par l'intermédiaire d'au moins un élément actionneur, de manière à éloigner linéairement la première portion de tube de la deuxième portion de tube.

6. Dispositif selon la revendication 5,
**caractérisé en ce que** l'élément actionneur est un ressort.

7. Dispositif selon une des revendications 1 à 6,
**caractérisé en ce que** sur la première (2) et la deuxième partie (3) un élément de retenue est prévu, par l'intermédiaire duquel la première partie reste dans la position verticale et la deuxième partie reste dans la première position, et **en ce que** les deux éléments de retenue peuvent être déclenchés simultanément, de sorte qu'un passage simultané de la première partie dans la position horizontale et de la deuxième partie dans la deuxième position soit possible.

8. Dispositif selon la revendication 7,
**caractérisé en ce que** l'élément de retenue (9) présente un élément en plastique SMA ou un matériau à mémoire de forme, qui peut être déclenché par alimentation en énergie électrique.

9. Dispositif selon une des revendications 1 à 8,
**caractérisé en ce que** la deuxième partie (3) dépasse au moins partiellement à travers le siège du véhicule (4).

10. Dispositif selon une des revendications 1 à 9,
**caractérisé en ce que** un ensemble de capteurs d'approche (10) est prévu sur ou dans le véhicule, lequel détecte une situation de collision inévitable et génère un signal, par l'intermédiaire duquel la première (1) et la deuxième partie (2) peuvent passer de la position horizontale à la deuxième position.

11. Dispositif selon une des revendications 1 à 10,
**caractérisé en ce que** la première partie (11) occupe dans la position horizontale un espace de montage à l'intérieur de la porte du véhicule (2), qui est occupé en fonctionnement normal par un autre composant du véhicule, de préférence par une glace de custode baissée.

12. Dispositif selon une des revendications 1 à 11,
**caractérisé en ce que** la première (1) et la deuxième partie (3) présentent dans la zone d'assemblage des contours d'assemblage à configuration respectivement conforme l'un par rapport à l'autre.
